# EUROPEAN PATENT APPLICATION

(11) **EP 4 074 541 A1**
(43) Date of publication of application: **19.10.2022**
(21) Application number: 20898323.9
(22) Date of filing: 27.08.2020
(51) Int. Cl.: B60L 53/80, B60S 5/06

(54) **BATTERY MODULE TRANSFER SYSTEM AND METHOD FOR AGV**

(30) Priority: 11.12.2019 CN 201911266207; 11.12.2019 CN 201922211125 U
(71) Applicant: Hangzhou Hikrobot Technology Co., Ltd., Hangzhou, Zhejiang 310051 (CN)
(72) Inventor: HUANG, Juming, Hangzhou, Zhejiang 310051 (CN)
(74) Representative: Epping - Hermann - Fischer
(86) International application number: PCT/CN2020/111809
(87) International publication number: WO 2021/114734

(57) **Abstract**

The present disclosure provides an AGV (9) battery module circulation system and circulation method. The system comprises a battery compartment (3), a battery module transport device (2) and a plurality of battery swapping stations (1). Each of the battery swapping stations (1) is configured to replace a battery module for the AGV (9); the battery compartment (3) is configured to store and charge the battery module; the battery module transport device (2) is configured to transport a new battery module taken out by the battery compartment (3) to any said battery swapping stations (1), and transport an old battery module replaced from an AGV (9) by any said battery swapping stations (1) to the battery compartment (3). The method includes: transporting a new battery module to a battery swapping station (1) by a battery module transport device (2), wherein the new battery module is a new battery module taken out from a battery compartment (3), the battery swapping station (1) is a battery swapping station (1) with a demand for a new battery module; transporting an old battery module to the battery compartment (3) by the battery module transport device (2), wherein the old battery module is an old battery module taken out by the battery swapping station (1), the battery swapping station (1) is a battery swapping station (1) with a demand for charging the old battery module replaced from an AGV (9).

## Description

The present application claims the priority to a Chinese patent application No. 201911266207.2 filed with the China National Intellectual Property Administration on December 11, 2019 and entitled "AGV Battery Module Circulation System and Circulation Method", and the priority to a Chinese utility model application No. 201922211125.X filed with the China National Intellectual Property Administration on December 11, 2019 and entitled "AGV Battery Module Circulation System", which are incorporated herein by reference in its entirety.

### Technical Field

The present disclosure relates to the technical field of logistics and transportation, and in particular, to an AGV battery module circulation system and circulation method.

### Background

With the development of society, logistics systems are becoming more and more automated and intelligent. In the current logistics sorting and transportation operations, a large number of AGVs (abbreviation of Automated Guided Vehicle) are needed, which are a kind of vehicles that can travel along specified guiding paths, have safety protection and various transfer functions.

AGVs usually use their own battery to provide power. When the power of the battery is about to be exhausted, it needs to be replenished in time. Therefore, the system needs to be equipped with automatic power supply equipment for AGVs.

In related art, there have been battery swapping stations integrating battery replacement and battery charging. It usually takes a few minutes to replace an AGV's battery module in a battery swapping station, but it usually takes hours to fully charge the replaced old battery module. There is a big time difference between these two operations. Moreover, there are only a limited number of charging bases in a battery swapping station that can be configured to store and charge battery modules. Therefore, all battery modules can be removed by a battery swapping station within a very short period of time, but it has to wait for the old battery modules to be fully charged, during which battery replacement operations cannot be performed, thus equipment utilization efficiency is low.

### SUMMARY

Embodiments of the present disclosure provide an AGV battery module circulation system and circulation method, to solve the above problem.

The embodiments of the present disclosure adopts the following technical solutions.

In a first aspect, the embodiments of the present disclosure provides an AGV battery module circulation system, including a battery compartment, a battery module transport device and a plurality of battery swapping stations;
wherein each of the battery swapping stations is configured to replace a battery module for an AGV;
the battery compartment is configured to store and charge the battery module;
the battery module transport device is configured to transport a new battery module taken out from the battery compartment to any of the battery swapping stations, and transport an old battery module replaced from an AGV by any of the battery swapping stations to the battery compartment.

In some embodiments, in the above circulation system, the battery compartment and the battery swapping stations are arranged independently from each other.

In some embodiments, in the above circulation system, the battery compartment includes a plurality of independent placement units which are arranged in two rows facing each other, and a traveling passage for the battery module transport device to pass through is formed between the two rows of independent placement units.

In some embodiments, in the above circulation system, spaces in front of the battery swapping stations are used for an entry and exit of an AGV, the two rows of independent placement units are arranged at a rear of a battery swapping station and are arranged to extend toward the rear of the battery swapping station.

In some embodiments, in the above circulation system, a plurality of temporary compartments for temporarily storing battery modules are arranged in the battery swapping stations;
and/or
a plurality of transfer compartments for storing battery modules at transfer positions are arranged in the battery module transport device;
   and/or
a plurality of charging bases for charging battery modules are arranged in the battery compartment.

In some embodiments, in the above circulation system, the temporary compartments are arranged in at least one row along a vertical direction, and each row has a plurality of temporary compartments;
and/or
the transfer compartments are arranged in at least one row along the vertical direction, and each row has a plurality of transfer compartments ;and/or
the charging bases are arranged in at least one row along the vertical direction, and each row has a plurality of charging bases.

In some embodiments, in the above circulation system, the battery module transport device includes at least one of an independent traveling device, a rail traveling device or a conveying device.

In some embodiments, in the above circulation system, the independent traveling device and the rail traveling device include one or more traveling units.

In some embodiments, in the above circulation system, the traveling unit is a wheeled transport robot.

In some embodiments, in the above circulation system, the battery compartment includes a plurality of independent placement units, the circulation system further includes a traveling passage that extends from a battery swapping station to each of the independent placement units;
the battery module transport device is an independent traveling device, which moves along the traveling passage and is configured for transporting a new battery module taken out from any of the independent placement units to a battery swapping station, and for transporting an old battery module replaced from an AGV by a battery swapping station to any of the independent placement units.

In a second aspect, embodiments of the present disclosure provides an AGV battery module circulation method, including the following steps:
transporting a new battery module to a battery swapping station by a battery module transport device, wherein the new battery module is a new battery module taken out from a battery compartment, and the battery swapping station is a battery swapping station with a demand for a new battery module;
transporting an old battery module to the battery compartment by the battery module transport device, wherein the old battery module is an old battery module taken out by the battery swapping station, and the battery swapping station is a battery swapping station with a demand for charging the old battery module replaced from an AGV.
In some embodiments, in the above circulation method, when the battery module transport device includes a battery module transport device or a rail traveling device and the battery module transport device and the rail traveling device includes a plurality of traveling units,
before the step of transporting a new battery module to the battery swapping station by the battery module transport device, the circulation method further includes the following step:
   taking out the new battery module from the battery compartment by the battery module transport device.

In some embodiments, in the above circulation method, the step of taking out the new battery module from the battery compartment by the battery module transport device includes :
taking out a preset number of new battery modules with maximum power from the battery compartment by the battery module transport device.

In some embodiments, in the above circulation method, when one of the traveling units needs to perform the step of taking out a new battery module from the battery compartment and the step of transporting an old battery module to the battery compartment at the same time,
the step of taking out a new battery module from the battery compartment and the step of transporting an old battery module to the battery compartment are performed alternately.

In some embodiments, in the above circulation method, before the step of transporting the old battery module to the battery compartment by the battery module transport device, the circulation method further includes the following step:
taking out the old battery module from the battery swapping station by the battery module transport device, wherein the battery swapping station is a battery swapping station with a demand for charging an old battery module replaced from an AGV.

In some embodiments, in the above circulation method, when one battery swapping station has both a demand for a new battery module and a demand for charging an old battery module replaced from an AGV,
the step of transporting the new battery module to the battery swapping station by the battery module transport device and the step of taking out the old battery module from the battery swapping station are alternately performed by the one traveling unit.

In some embodiments, in the above circulation method, if there is a traveling unit that is currently in an idle state, the step of transporting a new battery module to the battery swapping station by the battery module transport device is performed by a traveling unit that is currently in an idle state and closest to the battery swapping station.

In some embodiments, in the above circulation method, if there is no traveling unit that is currently in an idle state, the step of transporting a new battery module to the battery swapping station by the battery module transport device is performed by a traveling unit that has completed first the step of transporting an old battery module to the battery compartment by the battery module transport device.

At least one of the above technical solutions adopted in the embodiments of the present disclosure can achieve the following beneficial effects.

The AGV battery module circulation system and circulation method provided in the embodiments of present disclosure can share a charging compartment among a plurality of battery swapping stations, thus realizing optimal combination of resources, and greatly improving the utilization efficiency of battery swapping stations.

The AGV battery module circulation system disclosed by further embodiments of the present disclosure enables to move battery modules between the battery swapping station and each independent placement unit of the battery compartment by the independent placement unit, increase the number of independent placement units arbitrarily without adding any other equipment so as to expand the scale of the battery compartment and meet the demand for new battery modules in the battery swapping stations, thus greatly improving the utilization efficiency of the battery swapping station.

### BRIEF DESCRIPTION OF THE DRAWINGS

The accompanying drawings described herein are used to provide a further understanding of the present disclosure and constitute a part of the present disclosure. The exemplary embodiments of the present disclosure and their descriptions are used to explain the present disclosure and do not constitute an improper limitation of the present disclosure. In the accompanying drawing:
Fig. 1 is an overall structural view of an AGV battery module circulation system disclosed in an embodiment of the present disclosure, and specifically it is a perspective structural view of an AGV battery module circulation system that includes a plurality of battery swapping stations and a battery module transport device containing a plurality of traveling units.
Fig. 2 is a perspective structural view of an AGV battery module circulation system disclosed in an embodiment of the present disclosure, which includes only one battery swapping station and a battery module transport device containing only one traveling unit.
Fig. 3 is a perspective structural view of an AGV battery module circulation system disclosed in an embodiment of the present disclosure, which includes only one battery swapping station and a battery module transport device containing a plurality of traveling units.
Fig. 4 is a flowchart of an AGV battery module circulation method according to some embodiments of the present disclosure.

### Description of reference numbers:

1-Battery swapping station, 10-Temporary compartment, 2-Battery module transport device, 20-Transfer compartment, 3-Battery compartment, 30-Independent placement unit, 300-Charging base, 4-Traveling passage, 9-AGV.

### DETAILED DESCRIPTION OF THE PREFERRED EMBODIMENTS

In order to make the objectives, technical solutions and advantages of the present disclosure clearer, the technical solutions of the present disclosure will be clearly and completely described below with reference to the specific embodiments of the present disclosure and the corresponding drawings. Obviously, the described embodiments are only some, but not all, embodiments of the present disclosure. Based on the embodiments in the present disclosure, all other embodiments obtained by those of ordinary skill in the art without creative efforts shall fall within the protection scope of the present disclosure.

The technical solutions provided by various embodiments of the present disclosure will be described in detail below with reference to the accompanying drawings.

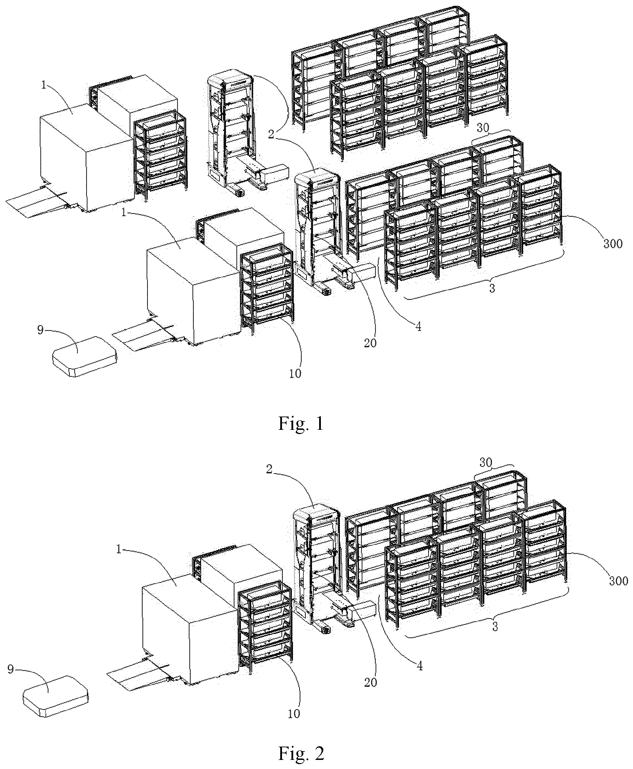

Some embodiments of the present disclosure disclose an AGV battery module circulation system. As shown in FIG. 1 to FIG. 3, the system includes a battery swapping station 1, a battery module transport device 2 and a battery compartment 3. Wherein, the battery swapping station 1 at least has a function of replacing a battery module for an AGV 9, i.e., removing the old battery module in a power shortage state from the AGV 9 and installing a temporarily stored new battery module with sufficient power on the AGV 9. It should be noted that an "old battery module" mentioned in this disclosure refers to an original battery module on the AGV 9, which has been depleted of its own power, or is in a power shortage state or low power state when it is being replaced; the "new battery module" refers to a newly prepared battery module, which has been charged by the battery compartment and has sufficient power, but it is not necessarily in a 100% fully charged state.

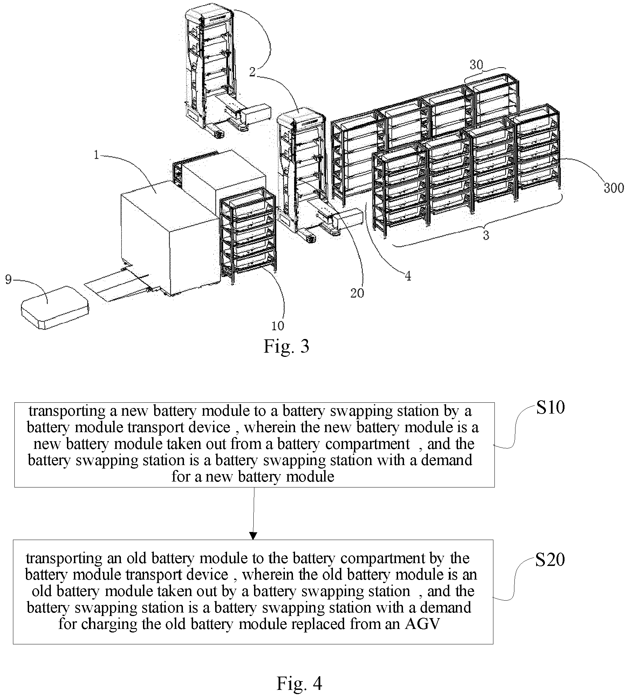

This system can include only one battery swapping station 1 (see Fig. 2 and Fig. 3), or can include a plurality of battery swapping stations 1 at the same time (see Fig. 1), and a plurality of battery swapping stations 1 can be placed side by side or arranged in a scattered manner, or even be arranged in different sorting workshops to improve the battery swapping efficiency of the entire logistics station as a whole.

The battery compartment 3 in the system is configured to store and charge the battery modules, and the circulation of the battery modules between the battery swapping station 1 and the battery compartment 3 is completed by a battery module transport device 2. The battery module transport device 2 can transport a new battery module taken out from the battery compartment 3 to any battery swapping station 1 demanding for a new battery module, or can transport an old battery module which is replaced from the AGV 9 within any battery swapping station 1 demanding for battery charging to the battery compartment 3.

In this system, when any battery swapping station 1 needs a new battery module, the battery module transport device 2 can transport a new battery module from the battery compartment 3. Therefore, the battery swapping station 1 is no longer limited by the number of charging bases, it has and always has new battery modules ready to use, thus greatly improving equipment utilization efficiency. Furthermore, since the battery compartment 3 in this system can serve a plurality of battery swapping stations 1 at the same time, the battery compartment 3 can be fully, reasonably and efficiently utilized. Compared to the technical solutions in which a battery swapping station 1 is equipped with a large-capacity battery compartment 3, the cost of the battery compartment 3 can be greatly reduced while satisfying the use of a plurality of battery swapping stations 1.

In the present system, the battery module transport device 2 can transport a corresponding battery module in or out each time the battery swapping station 1 needs a new battery module or there is an old battery module that has been replaced. This method is more suitable for the battery module transport device 2 using conveying devices such as conveyor belts and conveyor rollers.

In other embodiments, the battery module transport device 2 may also use a rail traveling device or an independent traveling device that does not depend on the track, or the like. These types of battery module transport devices 2 need to use an actual transport mechanism that moves between the battery swapping station 1 and the battery compartment 3. Therefore, the number of battery modules that can be transported each time is limited, and the interval between two adjacent transport processes is long. At this time, several (at least one) temporary compartments 10 for temporarily storing battery modules can be arranged in the battery swapping station 1. These temporary compartments 10 can be used for temporarily storing battery modules. Before the battery module transport device 2 arrives at the battery swapping station 1, the battery swapping station 1 can first take the new battery modules stored in the temporary compartment 10 for use, or temporarily store the replaced old battery modules in the temporary compartment 10 to improve equipment utilization efficiency.

Usually, a plurality of temporary compartments 10 are arranged inside the battery swapping station 1 at the same time. In order to save space and facilitate taking and placing battery modules, these temporary compartments 10 are arranged in rows along a vertical direction, and each row has a plurality of temporary compartments 10. There may be more than one row of temporary compartments 10 in one battery swapping station 1.

Similarly, in order to increase the number of battery modules that can be transported by the battery module transport device 2 during one transport process, the battery module transport device 2 may be provided with a plurality of transfer compartments 20 for transferring battery modules. In order to save space and facilitate taking and placing battery modules, these transfer compartments 20 can also be arranged in a row along a vertical direction, and each row has a plurality of transfer compartments 20. A plurality of rows of transfer compartments 20 can also be arranged on the battery module transport device 2. However, since the battery module transport device 2 needs to move and shuttle between a plurality of units inside the battery compartment 3, if the volume is too large, it may affect the flexibility. Therefore, only one row of transfer compartments 20 may be arranged in the battery module transport device 2.

A plurality of charging bases 300 for charging the battery modules may be provided in the battery compartment 3 of the present system. Each charging base 300 can charge one battery module independently. At the same time, the battery compartment 3 may be divided into a plurality of independent placement units 30, each of which may include a same or different number of charging bases 300. These independent placement units 30 can be placed at any position in the workshop independently, and the placement is very flexible. The number of independent placement units 30 can be reasonably increased or decreased according to the size of the workshop, the required number of the charging bases 300, and the like, which makes it easy to design the overall arrangement of the battery compartment 3. In order to save space and facilitate taking and placing the battery modules, the charging bases 300 inside each of these independent placement units 30 may be arranged in a row along the vertical direction. The number of the charging bases 300 in each independent placement unit 30 can be reasonably chosen according to the working height of the battery module transport device 2 and the height of the workshop.

As shown in Fig. 1 to Fig. 3, a plurality of independent placement units 30 may be arranged in two rows facing each other, and a traveling passage 4 for the battery module transport device 2 to pass through is formed between the two rows of independent placement units 30 to save workshop area. The traveling passage 4 extends from the battery swapping station 1 to each of the independent placement units 30, and the battery module transport device 2 can move along the traveling passage 4. In this system, the circulation of battery modules between the battery swapping station 1 and the battery compartment 3 is completed by the battery module transport device 2. The battery module transport device 2 can move along the traveling passage 4 and transport the new battery module taken out from any independent placement unit 30 to the battery swapping station 1, or can also transport an old battery module replaced from the AGV 9 in the battery swapping station 1 to any of the independent placement units 30 of the battery compartment 3.

The battery compartment 3 in this system can be arranged in the same workshop as the battery swapping station 1. At this time, the space in front of the battery swapping station 1 can be used for the entry and exit of an AGV 9. The two rows of independent placement units 30 are arranged at the rear of the battery swapping station 1 and extend toward the rear of the battery swapping station 1. In this way, the movement of the battery module transport device 2 between the battery swapping station 1 and the battery compartment 3 is basically along the front and rear directions of the battery swapping station 1, which can greatly shorten the moving distance of the battery module transport device 2.

In addition, the system can also be arranged in different workshops with the battery swapping station 1. For example, all the battery compartments 3 can be placed in an independent charging workshop, which can have better protection measures against fire and explosion to enhance safety.

The battery module transport device 2 in this system can have only one independent traveling unit (see Fig. 2), or can have a plurality of independent traveling units at the same time (for example, a wheeled transport robot, see Fig. 3). These traveling units can be assigned with tasks when necessary.

For the battery module transport device 2 in the system that adopts rail traveling equipment or independent traveling equipment that does not depend on the rail, one or more rail traveling units (such as rail cars) or independent traveling units independent of rail (such as wheeled transport robots) can be arranged in the battery module transport device 2. These traveling units can be assigned with tasks when necessary. For example, one or more battery swapping stations 1 may be equipped with one or more traveling units collectively, and these traveling units are only responsible for the circulation of the battery modules between these battery swapping stations 1 and the battery compartments 3. Alternatively, one or more traveling units may be collectively allocated to one or more of the independent placement units 30, and these traveling units are only responsible for the circulation of the battery modules between these independent placement units and these battery swapping stations 1. Still alternatively, one or more traveling units can be independently allocated to one or more independent placement units 30 and specified one or more battery swapping stations 1, and these traveling units are only responsible for the circulation of battery modules between these independent placement units 30 and these battery swapping stations 1. Of course, the division may not be performed at all, and each traveling unit can perform battery module circulation service for any battery swapping station 1 and any independent placement unit 30.

In various embodiments of the present disclosure, after the battery module transport device 2 transports new battery modules to the battery swapping station 1 that has demand for new battery modules, these new battery modules can be taken out by the auxiliary equipment of the battery swapping station 1 and transferred to the battery swapping station 1. Alternatively, it can be taken out by other equipment and transferred to the battery swapping station 1. Alternatively, it can be taken out by the battery module transport device 2 itself and transferred to the battery swapping station 1.

Similarly, in various embodiments of the present disclosure, after the battery module transport device 2 transports the old battery modules to the battery compartment 3, these old battery modules can be taken out by the auxiliary equipment of the battery compartment 3 and transferred to the battery compartment 3. Alternatively, it can be taken out by other equipment and transferred to the battery compartment 3. Alternatively, it can be taken out by the battery module transport device 2 itself and transferred to the battery compartment 3.

In addition, in various embodiments of the present disclosure, before the battery module transport device 2 transports new battery modules, the new battery modules to be transported need to be taken out from the battery compartment 3 and transferred to the battery module transport device 2 first. These new battery modules can be taken out by the auxiliary equipment of the battery compartment 3 and transferred to the battery module transport device 2. Alternatively, they can be taken out by other equipment and transferred to the battery module transport device 2. Alternatively, they can be taken out directly by the battery module transport device 2 from the battery compartment 3.

Similarly, in various embodiments of the present disclosure, before the battery module transport device 2 transports an old battery module to the battery compartment 3, it also needs to take out the old battery module from the battery swapping station 1 that demands for charging the old battery module replaced from the AGV and transfer them to battery module transport device 2. These old battery modules can also be taken out by the auxiliary equipment of the battery swapping station 1 itself and transferred to the battery module transport device 2. Alternatively, it can be taken out by other equipment and transferred to the battery module transport device 2. Alternatively, it can be taken out directly by the battery module transport device 2.

For the above process of transferring battery modules, if the battery module transport device 2 adopts a structure that does not have the ability to move, such as conveyor belts and conveyor rollers, other devices other than the battery module transport device 2 can be configured toplace the battery modules on the battery module transport device 2, or take out the battery modules from the battery module transport device 2.

For the embodiment in which the battery module transport device 2 adopts a rail traveling device with a plurality of traveling units or an independent traveling device that does not depend on the rail, in order to simplify the system structure and save costs, all the above-mentioned processes of transferring battery modules can be performed and completed by the battery module transport device 2. In this way, it is only necessary to provide a corresponding transfer structure on each traveling unit of the battery module transport device 2 to achieve the purpose of transfer, and it is not necessary to provide a transfer mechanism on each battery swapping station 1 or each independent placement unit 30.

When the battery module transport device 2 is configured to take out new battery modules from the battery compartment 3, especially for the embodiment in which a battery module is transported by the traveling unit, since there are usually a plurality of new battery modules that need to be taken out for each time, all the battery modules stored in the battery compartment 3 can be sorted and put into sequence according to the power they possess in advance before they are taken out, and a plurality of new battery modules with the maximum power can be taken out first. The number of the new battery modules to be taken out is determined by parameters such as the number of the new battery modules that the battery swapping station 1 needs, the number of temporary compartments 10 that can be provided by the battery swapping station 1, or the new battery modules that can be accommodated by a single traveling unit.

When a same traveling unit needs to take out a new battery module from the battery compartment 3 and transport an old battery module to the battery compartment 3 at the same time, the traveling unit can alternately transfer the new battery module and the old battery module to improve the operation efficiency. Specifically, for example, there may be a plurality of transfer compartments 20 in the traveling unit. An empty transfer compartment 20 or a charging base 300 is first found during the transfer process. If there is an empty transfer compartment 20 in the traveling unit, a new battery module in a charging base 300 can be transferred first to the transfer compartment 20 and the charging base is made available, and an old battery module is transferred from the traveling unit to the available charging base 300 to get charged. If there is an available charging base 300 in the battery compartment 3, then an old battery module in the traveling unit can be transferred to the available charging base 300 and a transfer compartment 20 is made available, and then a new battery module that has been fully charged in another charging base 300 is transferred to the available transfer compartment 20. Then, the two steps are performed alternately until all the old battery modules are transferred to the battery compartment 3, and a sufficient number of new battery modules are taken out.

When one battery swapping station 1 has both the demand for a new battery module and the demand for charging an old battery module replaced from an AGV, one traveling unit can also be configured to alternately transport the new battery module to the battery swapping station 1, and take out the old battery module from the battery swapping station 1. The specific execution steps for the traveling unit to alternately transfer the new battery module and the old battery module at the battery swapping station 1 are basically the same as the above-mentioned method of alternate transfer at the battery compartment 3, which will not be repeated here.

When there are a plurality of traveling units in the system, in order to improve the operation efficiency and respond to the needs of the battery swapping station 1 in time, statistics can be performed on the status of all the traveling units in the current system before tasks are assigned to a traveling unit. If there is a traveling unit which is currently in an idle state, the step of delivering a new battery module to the battery swapping station 1 can be performed by the traveling unit that is currently in an idle state and is closest to the battery swapping station 1. In this way, the distance traveled by the traveling unit is shorter, so that it can reach the battery swapping station 1 more quickly.

If no traveling unit that is currently in an idle state is found after statistics, the step of transporting a new battery module to the battery swapping station 1 can be performed by the traveling unit that completes first the step of transporting an old battery module to the battery compartment 3. It is expected that the new battery modules will be taken out and delivered to the desired battery swapping station 1 as soon as possible. In addition, at this time, the steps of transferring a new battery module and an old battery module can be alternately performed as described above, so as to further improve the efficiency.

In summary, the AGV battery module circulation system and circulation method provided in this embodiment can share charging compartments among a plurality of battery swapping stations, thus realizing optimal combination of resources, and greatly improving the utilization efficiency of battery swapping stations.

In this system, when the battery swapping station 1 needs a new battery module, the battery module transport device 2 can move the battery compartment 3 to each independent placement unit 30 and transport the new battery module to the battery swapping station 1. Since the battery module transport device 2 can move along the traveling passage 4 on its own without other auxiliary equipment, according to the demand for new battery modules by the battery swapping station 1, the number of independent placement units 30 can be arbitrarily expanded and arranged without adding other equipment to meet the demand for new battery modules by the battery swapping station. As long as the corresponding traveling passage 4 is reserved so that the battery module transport device 2 can reach these independent placement units 30, the expansion of the number of charging bases 300 can be completed, thus greatly improving the utilization efficiency of the battery swapping station.

As shown in Fig. 4, some embodiments of the present disclosure provide an AGV battery module circulation method, including the following steps:
Step S10, transporting a new battery module to a battery swapping station by a battery module transport device, wherein the new battery module is a new battery module taken out from a battery compartment, and the battery swapping station is a battery swapping station with a demand for a new battery module;
Step S20, transporting an old battery module to the battery compartment by the battery module transport device, wherein the old battery module is an old battery module taken out by the battery swapping station, and the battery swapping station is a battery swapping station with a demand for charging the old battery module replaced from an AGV.

In some embodiments, in the above-mentioned circulation method, when the battery module transport device includes a battery module transport device or a rail traveling device, and the battery module transport device and the rail traveling device include a plurality of traveling units,
before the step of transporting a new battery module to the battery swapping station by the battery module transport device, the circulation method further includes the following step:
taking out the new battery module from the battery compartment by the battery module transport device.

In some embodiments, in the above circulation method, the step of taking out the new battery module from the battery compartment by the battery module transport device includes :
taking out a preset number of new battery modules with maximum power from the battery compartment by the battery module transport device.

In some embodiments, in the above circulation method, when one of the traveling units needs to perform the step of taking out a new battery module from the battery compartment and the step of transporting an old battery module to the battery compartment at the same time,
the step of taking out a new battery module from the battery compartment and the step of transporting an old battery module to the battery compartment are performed alternately.

In some embodiments, in the above circulation method, before the step of transporting the old battery module to the battery compartment by the battery module transport device, the circulation method further includes the following step:
taking out the old battery module from the battery swapping station by the battery module transport device, wherein the battery swapping station is a battery swapping station with a demand for charging an old battery module replaced from an AGV.

In some embodiments, in the above circulation method, when one battery swapping station has both a demand for a new battery module and a demand for charging an old battery module replaced from an AGV,
the step of transporting the new battery module to the battery swapping station by the battery module transport device and the step of taking out the old battery module from the battery swapping station are alternately performed by the one traveling unit.

In some embodiments, in the above circulation method, if there is a traveling unit that is currently in an idle state, the step of transporting a new battery module to the battery swapping station by the battery module transport device is performed by a traveling unit that is currently in an idle state and closest to the battery swapping station.

In some embodiments, in the above circulation method, if there is no traveling unit that is currently in an idle state, the step of transporting a new battery module to the battery swapping station by the battery module transport device is performed by a traveling unit that has completed first the step of transporting an old battery module to the battery compartment by the battery module transport device.

The above embodiments of the present disclosure mainly describe the differences between the various embodiments. As long as the different optimized features of the various embodiments are not contradictory, they can be combined to form more preferable embodiments. In consideration of the brevity of the text, it will not be repeated here.

The above descriptions are merely embodiments of the present disclosure, and are not intended to limit the present disclosure. Various modifications and variations of the present disclosure will occur to those skilled in the art. Any modification, equivalent replacement, improvement made within the spirit and principle of the present disclosure shall be included within the scope of the claims of the present disclosure.

## Claims

1. An AGV battery module circulation system, comprising a battery compartment, a battery module transport device and a plurality of battery swapping stations;
wherein each of the battery swapping stations is configured to replace a battery module for an AGV;
the battery compartment is configured to store and charge the battery module;
the battery module transport device is configured to transport a new battery module taken out from the battery compartment to any of the battery swapping stations, and transport an old battery module replaced from an AGV by any of the battery swapping stations to the battery compartment.

2. The circulation system according to claim 1, wherein, the battery compartment and the battery swapping stations are arranged independently from each other.

3. The circulation system according to claim 2, wherein, the battery compartment comprises a plurality of independent placement units which are arranged in two rows facing each other, and a traveling passage for the battery module transport device to pass through is formed between the two rows of independent placement units.

4. The circulation system according to claim 3, wherein, spaces in front of the battery swapping stations are used for an entry and exit of an AGV, the two rows of independent placement units are arranged at a rear of a battery swapping station and are arranged to extend toward the rear of the battery swapping station.

5. The circulation system according to any one of claims 1 to 4, wherein,
a plurality of temporary compartments for temporarily storing battery modules are arranged in the battery swapping stations;
and/or
a plurality of transfer compartments for storing battery modules at transfer positions are arranged in the battery module transport device;
and/or
a plurality of charging bases for charging battery modules are arranged in the battery compartment.

6. The circulation system according to claim 5, wherein,
the temporary compartments are arranged in at least one row along a vertical direction, and each row has a plurality of temporary compartments;
and/or
the transfer compartments are arranged in at least one row along the vertical direction, and each row has a plurality of transfer compartments ;and/or
the charging bases are arranged in at least one row along the vertical direction, and each row has a plurality of charging bases.

7. The circulation system according to any one of claims 1 to 4, wherein, the battery module transport device comprises at least one of an independent traveling device, a rail traveling device or a conveying device; the independent traveling device and the rail traveling device comprise one or more traveling units.

8. The circulation system according to claim 7, wherein the traveling unit is a wheeled transport robot.

9. The circulation system according to claim 1, wherein, the battery compartment comprises a plurality of independent placement units, the circulation system further comprises a traveling passage that extends from a battery swapping station to each of the independent placement units;
the battery module transport device is an independent traveling device, which moves along the traveling passage and is configured for transporting a new battery module taken out from any of the independent placement units to a battery swapping station, and for transporting an old battery module replaced from an AGV by a battery swapping station to any of the independent placement units.

10. An AGV battery module circulation method suitable for the AGV battery module circulation system according to any one of claims 1 to 9, comprising the following steps:
transporting a new battery module to a battery swapping station by a battery module transport device, wherein the new battery module is a new battery module taken out from a battery compartment, and the battery swapping station is a battery swapping station with a demand for a new battery module;
transporting an old battery module to the battery compartment by the battery module transport device, wherein the old battery module is an old battery module taken out by the battery swapping station, and the battery swapping station is a battery swapping station with a demand for charging the old battery module replaced from an AGV.

11. The circulation method according to claim 10, wherein, when the battery module transport device comprises an independent traveling device or a rail traveling device, and the independent traveling device and the rail traveling device each comprises a plurality of traveling units,
before the step of transporting a new battery module to the battery swapping station by the battery module transport device, the circulation method further comprises the following step:
taking out the new battery module from the battery compartment by the battery module transport device.

12. The circulation method according to claim 11, wherein, the step of taking out the new battery module from the battery compartment by the battery module transport device comprises :
taking out a preset number of new battery modules with maximum power from the battery compartment by the battery module transport device.

13. The circulation method according to claim 11 or 12, wherein, when one of the traveling units needs to perform the step of taking out a new battery module from the battery compartment and the step of transporting an old battery module to the battery compartment at the same time,
the step of taking out a new battery module from the battery compartment and the step of transporting an old battery module to the battery compartment are performed alternately.

14. The circulation method according to claim 11 or 12, wherein, before the step of transporting the old battery module to the battery compartment by the battery module transport device, the circulation method further comprises the following step:
taking out the old battery module from the battery swapping station by the battery module transport device, wherein the battery swapping station is a battery swapping station with a demand for charging an old battery module replaced from an AGV.

15. The circulation method according to claim 14, wherein, when one battery swapping station has both a demand for a new battery module and a demand for charging an old battery module replaced from an AGV,
the step of transporting the new battery module to the battery swapping station by the battery module transport device and the step of taking out the old battery module from the battery swapping station are alternately performed by the one traveling unit.

16. The circulation method according to claim 11 or 12, wherein, if there is a traveling unit that is currently in an idle state, the step of transporting a new battery module to the battery swapping station by the battery module transport device is performed by a traveling unit that is currently in an idle state and closest to the battery swapping station.

17. The circulation method according to claims 11 and 12, wherein, if there is no traveling unit that is currently in an idle state, the step of transporting a new battery module to the battery swapping station by the battery module transport device is performed by a traveling unit that has completed first the step of transporting an old battery module to the battery compartment by the battery module transport device.
